# EUROPEAN PATENT SPECIFICATION

(11) **EP 3 346 422 B1**
(45) Date of publication and mention of the grant of the patent: **28.10.2020**
(21) Application number: 17831430.8
(22) Date of filing: 11.08.2017
(51) Int. Cl.: G06K 19/04, G06K 19/077, H01Q 1/22

(54) **PLASTIC KEY FOB WITH FULL-COLOUR PRINTING AND A BUILT-IN RFID TAG**
KUNSTSTOFFSCHLÜSSELANHÄNGER MIT VOLLFARBENDRUCK UND EINGEBAUTEM RFID-TAG
PORTE-CLÉ PLASTIQUE AVEC IMPRESSION POLYCHROME COMPORTANT UNE ÉTIQUETTE RFID INTÉGRÉE

(43) Date of publication of application: 11.07.2018
(73) Proprietor: Limited Liability Company Intelligent Sistems Of Business Control, Moscow, Zelenograd 124460 (RU)
(72) Inventor: DEMIDOV, Ivan Sergeevich, Moscow Zelenograd 124575 (RU)
(74) Representative: Benatov, Samuil Gabriel
(86) International application number: PCT/RU2017/000587
(87) International publication number: WO 2018/016997

(56) References cited:
- WO-A2-2007/027611
- KR-A- 20140 141 805
- RU-C2- 2 337 400
- UA-U- 34 608
- US-A1- 2007 060 326
- US-A1- 2014 306 017
- US-A1- 2015 021 402
- US-B1- 7 156 301

## Description

A group of inventions regarding the design of a plastic key fob with full-color printing equipped with a built-in RFID tag and the manufacturing method.

A plastic key fob with full-color printing and an RFID tag may be equipped with a built-in RFID tag conforming to ISO 14443, ISO 15693, ISO 18000 and ISO 11784 / ISO 11785 standards.

The key fob may successfully replace plastic cards and be used in transportation systems, as a social card, a loyalty card, a key card to enter secured areas, as well as for advertisements.

Key fobs with an RFID chip are known from prior art.

Key fobs and mini-cards manufactured by the Chinese company named Cet http://www.cetech.com.hk/en_us/products/detail/4. Key fobs come in a variety of shapes, including rectangular and trapezoid, and can be designed as animals and characters, etc.

The main disadvantage of key fobs is that they are fragile and unreliable in use, because the surface layer is usually made of epoxy coating, which is very brittle. When the key fob falls on a hard surface from a height of 1 or 2 meters, it cracks and delaminates, and its material is prone to scratching. Due to UV light exposure, the material turns yellow and the paint fades, the surface turns matte, and thus the key fob loses its appearance. When the fob is attached to keys on a common metal ring, it is more likely to be lost due to increased brittleness at the attaching point (eyelet). Epoxy resin is toxic.

In terms of the manufacturing method, the predecessor of the plastic fob is the plastic (smart) card.

There is a dual-interface card comprises two laminating layers with a support sheet between them, which forms the base in which the antenna is sealed, with a compensation sheet. A module with a built-in mini-antenna is located in the surface cavity of the smart card (ref. US 2015021402 A1).

Foldable fobs of multilayer material having one or more holes or apertures therein for holding key chains, or other devices for attaching the fobs to other items are known from US7156301 B1. This fob comprises a multilayer core of several layers made of polyvinylchloride (PVC) and polypropylene (PP) stuck together with protective layers made of flat sheet of polyvinylchloride (PVC) or polyethylene terephthalate (PET).

The objective of this invention group is to create a convenient, reliable, ergonomic, compact plastic key fob with full-color printing and an RFID tag that serves as a smart card, and to develop a manufacturing method for the plastic key fob.

The technical effect of the claimed device and its manufacturing method consists in the following: to create a device able to operate as a key fob and a contactless smart card; increased its resistance to mechanical loads arising in everyday use; increased resistance to ambient temperature changes and UV radiation due to the materials used during its fabrication; increased device ergonomics and usability. The proposed manufacturing method automates the production process, reduces production costs, considerably improves production rate, and reduces the number of defects.

The technical effect is achieved by using the following combination of essential features:
The plastic key fob is made with color printing and is equipped with a built-in RFID tag that conforms to ISO 14443, ISO 15693, ISO 18000 or ISO 11784 / ISO 11785 standards. The key fob is made in the form of a rectangle with rounded corners, and is 50.95-51.05 mm long, 24.61-24.71 mm wide, and 3.34-4.34 mm thick. It has a round through-hole for a split ring with inner diameter of 4.00-4.50 mm. The key fob corners are rounded, wherein the corner near the hole has a bending radius R = 5.00 mm - 6.00 mm, while the other three corners of the key fob have bending radiuses R = 3.00 mm - 3.36 mm. The key fob weight is 4.65-4.95 g. The key fob consists of sequentially combined layers of a front protective plastic laminating layer, a decorative/informative layer on the front face, a pre-laminate center layer with at least one installed RFID tag, a decorative/informative layer on the reverse side, and back protective plastic laminating layer. These layers form the base that is coated with a composite convex layer made of polyurethane-based materialon both sides. A unique serial number for the RFID tag may be applied on the surface of the decorative/informative layer, thus making it possible to identify the key fob.

The plastic fob manufacturing method employs equipment designed to manufacture plastic smart cards, as well as sheet materials with equal dimensions, for example, of the 295 x 480 mm format. The pre-laminate center sheet is formed, first of all. For this reason, plastic sheets are placed, on both sides, on the sheet with installed RFID tag(s), and are joined together by thermal compression. Then, the multilayer structure - the body sheet - is formed by placing an informative/decorative sheet and a protective laminating layer on both sides of the prelaminate center sheet. Then, all sheets are joined together by thermal compression, and a number of key fob blanks, for example, 24, 48, 72 or more, with a round through hole in each blank, are cut out from the produced multilayer structure. At the same time, all fobs are left on the body sheet, which are retained by the semicircle located at the corner near the hole; wherein, two notches are made on the semicircle that later facilitate the retrieval of the key fobs from the body. Then, key fob blanks are first coated with a liquid polyurethane-based material on one side, put on a tray and left for (4 to 6) hours for polymerization and drying. During polymerization, the composite convex layer material sticks firmly to the PVC support, which prevents it from delaminating during key fob use and storage. The temperature and viscosity of the liquid material used to obtain the necessary volume and height of the composite convex layers is selected empirically. Simultaneously, various additives including an antimicrobial one are added to the material. As a result of these additives, the composite convex layers become resistant to pollution and multiple bends; it does not permit ultraviolet light to pass through. After drying, the body sheet with key fob blanks is turned over, and covered with the polyurethane-based liquid material on the other side to form the composite convex reverse layer. The finished key fobs manufactured by the method described are dried, retrieved from the body and packaged.

A special type of key fob.

The composite convex layer is made of polyurethane-based material of 1.4 mm thick. A plastic covering sheet on the reverse side contains an informative layer with a unique RFID serial number. Therefore, additional counterfeit protection is provided, as well as a convenient way to identify the key fob. The decorative/informative layer on the front face contains the inscription TROIKA (trio of horses) on a plain blue background with the image of three white horses (TROIKA transport card in the key fob format). The informative/decorative layer surface contains the embossed inscription AIRTAG. This inscription becomes visible when the light is refracted at a certain viewing angle, thus the key fob is protected against counterfeit. An NXP MIFARE Plus type RFID tag is installed on the key fob. The key fob is made as a 24.63 mm x 51.03 mm rectangle with rounded corners and contains a round through-hole with 4.3 mm in diameter located in the upper right corner of the fob. The fob thickness varies from 3.4 mm to 3.8 mm.

The method for manufacturing the key fob involves one antenna being installed by ultrasonic soldering on one side of a 295 x 480 mm plastic sheet. Then, a compensation sheet is placed over the plastic one on the antenna side, and the sheets are joined together by thermal compression. A decorative/informative layer comprising the front face is placed on one side of the pre-laminate sheet produced. It contains the image of three white horses and TROIKA inscription. The other side of pre-laminate sheet is covered with a decorative/informative layer that contains the card ID number on a plain blue background. Then, additional protective plastic laminate sheets are placed on both sides; therefore, a multilayer structure (a stack) is formed for the subsequent press-lamination process. After assembling, the sheet edges are fixed together by thermal compression and scorched. The multilayer structure produced is referred to as the body sheet. 72 blanks with round through-holes in each are cut out from the body sheet; at the same time, the fobs are retained in the body sheet by the semicircle located at the corner near the hole until the manufacturing process is completed. A through-hole is made in the fob in such a way that the distance to its edges allows for subsequent application of the polyurethane-based liquid material on the fob surface, which uniformly covers the whole key fob surface during polymerization. The polyurethane-base liquid material is applied first on one side of the body, resulting in formation of the composite convex front layer. After drying, the multilayer structure is turned over, and covered on the opposite side to make the composite convex layer reverse side. Then, the multilayer structure with key fob blanks is dried, after which finished key fobs are taken from the body sheet and packaged.

Thus, the manufacturing method for key fobs allows to produce 72 plastic fobs using one sheet, which are easy to use and have a number of advantages, such as: high strength (high tensile strength); elasticity; good resistance to abrasion; resistance to mechanical stress. The key fob coating provides the following advantages: high resistance to tearing and deformation; high resistance to thermal effects; temperature range from - 40 °C to + 80 °C, i.e. can be used indoors or outdoors; resistance to external impacts (weather conditions, frost, etc.); high resistance to chemicals (resistance to oil and gasoline, acids). The coating is resistant to microorganisms; it has a good damping ability; resistant to radiation; it does not crack or corrode. Polyurethane resin is absolutely transparent, non-toxic, does not contain heavy metals, and does not turn yellow with time.

This manufacturing method employs equipment designed for manufacturing smart cards, and the key fob geometry and dimensions are selected as a convenient and efficient production method. A shape is created with specific dimensions that allows simultaneously to minimize manual labor, to automate the process, and to achieve the maximum output of useful products during the sheet-processing method. For the customer, the procedure for getting plastic key fobs is the same as for plastic cards packaged according to sequence numbers. Moreover, polyurethane-based liquid material contains an anti-microbial additive, which does not permit UV light to pass through, is resistant to pollution and multiple bends, and glues securely to the PVC body during polymerization. During manufacturing of the key fob, the body thickness is selected in such a way that the fob blank conforms to the thickness requirements specified in Specification (TU) 4084-001-85729412-2015.

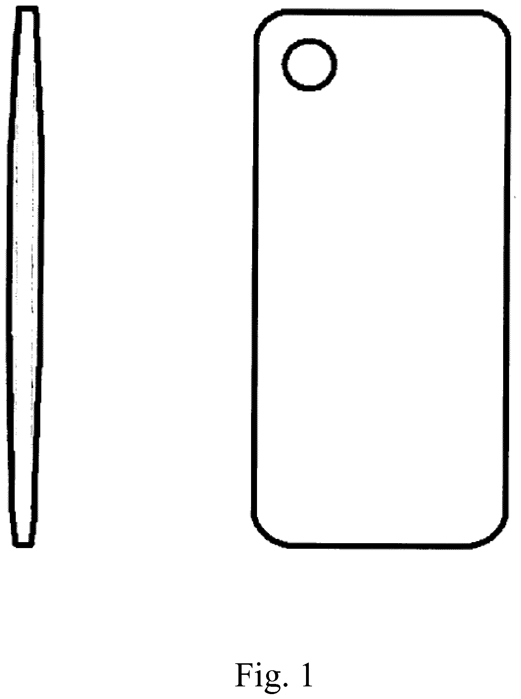

The claimed group of inventions is explained in the drawings, where Fig. 1 illustrates the general appearance of the key fob (from the front and side).

Hypoallergenic materials are used in the manufacturing of key fobs in compliance with European Regulation (EC) 1907/2006, which confirms their safety for everyday use. The fob composite convex layers are anti-bacterial and protects from fading (UV protection). The composite convex layers material may contain a flavoring agent to smell the key fob, colorants and/or fluorescent additives, glitter.

The elasticity of the composite convex layers' material allows the fob to "recover" after being dented or scratched, for example, by keys. The composite convex layers also provide high resistance to environmental impacts and corrosive media (petrol, detergents, etc.). The plastic fob produced in this way can be easily used as a key fob, a plastic card, transport card, school card, social card, loyalty card, security pass to guarded facilities or for advertisement.

The key fob dimensions make it easy to store and use in different ways. The key fob can be attached to keys, handbags, and other goods using the round through-hole.

## Claims

1. A color printed plastic key fob comprising a built-in RFID tag, said plastic key fob comprising a body of sequentially combined layers of:
- a front protective laminating layer,
- a decorative/informative face layer,
- a pre-laminate center layer with at least one installed RFID tag,
- a decorative/informative reverse layer, and
- a back protective laminating layer,
- further having a rectangular shape with the following dimensions:
- a length of 50.95 mm to 51.05 mm,
- a width of 24.61 mm to 24.71 mm;
- further having a round hole near one corner for attaching a key ring;
- further having rounded corners;
**characterized in that** said plastic key fob
- further having a weight between 4.65 g and 4.95 g;
- further having a thickness of 3.34 mm to 4.34 mm;
- wherein, the round hole has a diameter from 4.00 mm to 4.50 mm;
- wherein, the corner near the round hole has a bending radius R = 5.00 mm to 6.00 mm, while the other three corners have bending radiuses R = 3.00 mm to 3.36 mm;
and further comprising on both sides of the body respectively a composite convex front layer and a composite convex reverse layer made of polyurethane-based material.

2. A key fob of claim 1, **characterized in that** material of the pre-laminate center layer and material of the decorative/informative layers are painted in different colors.

3. A key fob of claim 1, **characterized in that** it further comprises an electronic circuit with a LED bulb.

4. A key fob of claim 1, **characterized in that** thickness of the composite convex layer is at least 1.4 mm in its central part.

5. A key fob of claim 1, **characterized in that** at least one of the decorative/informative layers contains an embossed image or inscription that is visible when light hits the key fob surface at a certain angle.

6. A key fob of claim 1, **characterized in that** the front and back protective laminating layers are made of PVC, PET, or PC material.

7. A method for manufacturing a plastic key fob of claim 1, **characterized by** the following steps:
- providing a plurality of sheets of equal size;
- forming the pre-laminate center layer by covering a first sheet of said plurality of sheets with second and third plastic sheets of said plurality of sheets on its front and back sides, said first sheet comprising the at least one RFID tag, and further joining together said first, second and third sheets by thermal compression, thereby forming a multilayer structure of the pre-laminate center layer;
- covering said multilayer structure of the pre-laminate center layer on one side by the decorative/informative face layer and the front protective laminating layer and on the other side by decorative/informative reverse layer and the back protective laminating layer; and
- joining said multilayer structure of the pre-laminate center layer and its covering layers together by thermal compression, thereby forming multilayer structure of a body sheet;
- cutting out several key fob blanks, for example, 24, 48, 72 or more, from the body sheet and cutting out a round through-hole in each blank, and, retaining of said key fob blanks in the body sheet by semicircles located at blank corners that are near said through-holes;
- making two notches on said semicircles for facilitating later retrieval of the blanks from the body sheet;
- covering all blanks on one side with the polyurethane-based liquid material with further polymerization that results in the formation of the convex composite front layer,
- turning the body sheet over and covering all blanks with the polyurethane-based liquid material on the reverse side, which after polymerization results in the formation of the convex composite reverse layer;
- drying the resulting multilayer sheet with blanks;
- retrieving the finished key fobs from the body sheet and packaging them.

8. The method for manufacturing of claim 7, **characterized in that** the temperature and viscosity of the liquid material used to obtain the necessary volume and height of the composite convex layer is selected empirically.

9. The method for manufacturing of claim 7, **characterized in that** the material of the composite convex layer contains an anti-microbial additive.

10. The method for manufacturing of claim 7, **characterized in that** the material of the composite convex layer contains an aromatic additive that gives the product a scent.

11. The method for manufacturing of claim 7, **characterized in that** the material of the composite convex layer contains glitter.

12. The method for manufacturing of claim 7, **characterized in that** the material of the composite convex layer contains colorants or fluorescent additives.

13. The method for manufacturing of item 7, **characterized in that** the material of the composite convex layer does not permit UV light to pass through.

## Patentansprüche

1. Farbbedruckter Kunststoff-Schlüsselanhänger mit einem eingebauten RFID-Etikett, wobei der Kunststoff-Schlüsselanhänger einen Körper umfasst aus nacheinander kombinierten Schichten von:
- eine vordere laminierte Schutzschicht,
- eine dekorative / informative Deckschicht,
- eine vorlaminierte Mittelschicht mit mindestens einem installierten RFID-Etikett,
- eine dekorative / informative reversive Schicht und
- eine laminierte Rückenschutzschicht,
- ferner eine rechteckige Form mit folgenden Abmessungen hat:
- eine Länge von 50,95 mm bis 51,05 mm,
- eine Breite von 24,61 mm bis 24,71 mm;
- ferner ein rundes Loch in der Nähe einer Ecke zum Anbringen eines Schlüsselrings hat;
- weiter abgerundete Ecken hat;
**dadurch gekennzeichnet, dass** der Kunststoffschlüsselanhänger
- ferner ein Gewicht zwischen 4,65 g und 4,95 g haben;
- ferner eine Dicke von 3,34 mm bis 4,34 mm hat;
- wobei das runde Loch einen Durchmesser von 4,00 mm bis 4,50 mm hat;
- wobei die Ecke in der Nähe des runden Lochs einen Biegeradius R = 5,00 mm bis 6,00 mm hat, während die anderen drei Ecken Biegeradien R = 3,00 mm bis 3,36 mm haben;
und ferner auf beiden Seiten des Körpers jeweils eine zusammengesetzte konvexe Frontschicht und eine zusammengesetzte konvexe Rückschicht aus Material auf Polyurethanbasis umfasst.

2. Schlüsselanhänger nach Anspruch 1, der **dadurch gekennzeichnet ist, dass** das Material der vorlaminierten Mittelschicht und das Material der dekorativen / informativen Schichten in verschiedenen Farben lackiert sind.

3. Schlüsselanhänger nach Anspruch 1, **dadurch gekennzeichnet, dass** er ferner eine elektronische Schaltung mit einer LED umfasst.

4. Schlüsselanhänger nach Anspruch 1, der **dadurch gekennzeichnet ist, dass** die Dicke der konvexen Verbundschicht in ihrem Mittelteil mindestens 1,4 mm beträgt.

5. Schlüsselanhänger nach Anspruch 1, **dadurch gekennzeichnet, dass** mindestens eine der dekorativen / informativen Schichten ein geprägtes Bild oder eine Inschrift enthält, die sichtbar ist, wenn Licht in einem bestimmten Winkel auf die Schlüsselanhängeroberfläche trifft.

6. Schlüsselanhänger nach Anspruch 1, der **dadurch gekennzeichnet ist, dass** die vorderen und hinteren Schutzlaminierschichten aus PVC-, PET- oder PC-Material bestehen.

7. Verfahren zur Herstellung eines Kunststoffschlüsselanhängers nach Anspruch 1, **gekennzeichnet durch** die folgenden Schritte:
- Bereitstellung einer Vielzahl von Blätter gleicher Größe;
- Bilden der vorlaminierten Mittelschicht durch Abdecken eines ersten Blattes der mehreren Blätter mit zweiten und dritten Kunststoffblätter der mehreren Blätter auf ihrer Vorder- und Rückseite, wobei der erste Blätter das mindestens eine RFID-Etikett umfasst, und weiteres zusammen Verbinden des ersten, zweiten und dritten Blattes durch thermische Kompression, wodurch eine Mehrschichtstruktur der vorlaminierten Mittelschicht gebildet wird;
- Bedecken der Mehrschichtstruktur der vorlaminierten Mittelschicht auf einer Seite mit der dekorativen / informativen Deckschicht und der vorderen Schutzlaminierschicht und auf der anderen Seite mit der dekorativen / informativen Rückschicht und der hinteren Schutzlaminierschicht; und
- Verbinden der Mehrschichtstruktur der vorlaminierten Mittelschicht und ihrer Deckschichten durch thermische Kompression, wodurch eine Mehrschichtstruktur eines Körperblattes gebildet wird;
- Ausschneiden mehrerer Schlüsselanhänger-Rohlinge, beispielsweise 24, 48, 72 oder mehr, aus dem Körperblatt und Ausschneiden eines runden Durchgangslochs in jedem Rohling und Bewahren der Schlüsselanhänger-Rohlinge in dem Körperblatt durch Halbkreise angeordnet an den Ecken des Rohlings, die sich in der Nähe der Durchgangslöcher befinden;
- Fertigen von zwei Kerben an diesen Halbkreisen, um das spätere Abrufen der Rohlinge vom Körperblatt zu erleichtern;
- Bedecken aller Rohlinge auf einer Seite mit dem flüssigen Material auf Polyurethanbasis mit weiterer Polymerisation, die zur Bildung der konvexen Verbundfrontschicht führt,
- Umdrehen des Körperblattes und Abdecken aller Rohlinge mit dem flüssigen Material auf Polyurethanbasis auf der Rückseite, was nach der Polymerisation zur Bildung der konvexen Verbundrückseite führt;
- Trocknen des resultierenden mehrschichtigen Blattes mit Rohlingen;
- die fertigen Schlüsselanhänger aus dem Körperblatt entnehmen und verpacken.

8. Verfahren zur Herstellung nach Anspruch 7, **dadurch gekennzeichnet, dass** die Temperatur und Viskosität des flüssigen Materials, das zum Erhalten des erforderlichen Volumens und der Höhe der konvexen Verbundschicht verwendet wird, empirisch ausgewählt wird.

9. Verfahren zur Herstellung nach Anspruch 7, **dadurch gekennzeichnet, dass** das Material der konvexen Verbundschicht ein antimikrobielles Additiv enthält.

10. Verfahren zur Herstellung nach Anspruch 7, **dadurch gekennzeichnet, dass** das Material der konvexen Verbundschicht ein aromatisches Additiv enthält, das dem Produkt einen Geruch verleiht.

11. Verfahren zur Herstellung nach Anspruch 7, **dadurch gekennzeichnet, dass** das Material der konvexen Verbundschicht Glitzern enthält.

12. Verfahren zur Herstellung nach Anspruch 7, **dadurch gekennzeichnet, dass** das Material der konvexen Verbundschicht Farbstoffe oder fluoreszierende Additive enthält.

13. Verfahren zur Herstellung von Punkt 7, **gekennzeichnet dadurch, dass** das Material der konvexen Verbundschicht kein UV-Licht durchlässt.

## Revendications

1. Porte-clés en plastique imprimé en couleur comprenant une étiquette RFID intégrée, ledit porte-clés en plastique comprenant un corps de couches combinées séquentiellement de :
- une couche de stratification protectrice avant,
- une couche avant décorative/informative,
- une couche centrale pré-stratifiée avec au moins une étiquette RFID installée,
- une couche arrière décorative/informative, et
- une couche de stratification protectrice arrière,
- ayant en outre une forme rectangulaire avec les dimensions suivantes :
- une longueur de 50,95 mm à 51,05 mm,
- une largeur de 24,61 mm à 24,71 mm,
- ayant en outre un trou rond près d'un coin pour attacher un anneau d'une clé,
- ayant en outre des coins arrondis,
**caractérisé en ce que** ledit porte-clés en plastique :
- a en outre un poids compris entre 4,65g et 4,95g,
- a en outre une épaisseur de 3,34 mm à 4,34 mm,
- dans lequel le trou rond a un diamètre de 4,00 mm à 4,50 mm,
- dans lequel le coin proche du trou rond a un rayon de courbure R= 5,00 mm à 6,00 mm, tandis que les trois autres coins ont des rayons de courbure R= 3,00 mm à 3,36 mm,
et comprenant en outre sur les deux faces du corps respectivement une couche frontale convexe composite et une couche arrière convexe composite en matériau à base de polyuréthane.

2. Porte-clés selon la revendication 1, **caractérisé en ce que** le matériau de la couche centrale pré-stratifiée et le matériau des couches décoratives/informatives sont peints de différentes couleurs.

3. Porte-clés selon la revendication 1, **caractérisé en ce qu'**il comprend en outre un circuit électronique avec une ampoule LED.

4. Porte-clés selon la revendication 1, **caractérisé en ce que** l'épaisseur de la couche composite convexe est d'au moins 1,4 mm dans sa partie centrale.

5. Porte-clés selon la revendication 1, **caractérisé en ce qu'**au moins l'une des couches décoratives/informatives contient une image ou inscription en relief qui est visible lorsque la lumière porte sur la surface du porte-clés sous un angle donné.

6. Porte-clés selon la revendication 1, **caractérisé en ce que** les couches de stratification protectrices avant et arrière sont en PVC, PET ou matériau PC.

7. Procédé de fabrication d'un porte-clés en plastique selon la revendication 1, **caractérisé par** les étapes suivantes :
- fournir une pluralité de feuilles de taille égale,
- former la couche centrale pré-stratifiée, en recouvrant sur ses faces avant et arrière une première feuille de ladite pluralité de feuilles avec des deuxième et troisième feuilles en plastique de ladite pluralité de feuilles, ladite première feuille comprenant ladite au moins une étiquette RFID, et ensuite joindre ensemble lesdites première, deuxième et troisième feuilles par compression thermique, formant ainsi une structure multicouche de la couche centrale pré-stratifiée,
- recouvrir ladite structure multicouche de la couche centrale pré-stratifiée à l'une de ses faces par la couche décorative/informative et par la couche avant de stratification protectrice avant, et à l'autre de ses faces par la couche arrière décorative/informative et la couche de stratification de protection arrière, et
- joindre ladite structure multicouche de la couche centrale pré-stratifiée et ses couches de revêtement ensemble par compression thermique, formant ainsi une structure multicouche d'un corps en feuille,
- découper du corps en feuille plusieurs ébauches de porte-clés - par exemple 24, 48, 72 ou plus - et découper un trou traversant rond dans chaque ébauche, et retenir lesdites ébauches de porte-clés dans le corps en feuille par des demi-cercles situés aux coins des ébauches qui sont proches desdits trous traversant,
- réaliser deux encoches sur lesdits demi-cercles pour faciliter la récupération ultérieure des ébauches du corps en feuille,
- recouvrir toutes les ébauches à une face avec le matériau liquide à base de polyuréthane avec une polymérisation supplémentaire qui entraîne la formation de la couche frontale convexe composite,
- retourner le corps en feuille et recouvrir toutes les ébauches avec le matériau liquide à base de polyuréthane sur la face arrière, ce qui après polymérisation conduit à la formation de la couche arrière convexe composite,
- sécher la feuille multicouche avec les ébauches qui en résultent,
- récupérer les porte-clés finis du corps en feuille et les emballer.

8. Procédé de fabrication selon la revendication 7, **caractérisé en ce que** la température et la viscosité du matériau liquide utilisé pour obtenir le volume et la hauteur nécessaires de la couche convexe composite sont choisies empiriquement.

9. Procédé de fabrication selon la revendication 7, **caractérisé en ce que** le matériau de la couche composite convexe contient un additif antimicrobien.

10. Procédé de fabrication selon la revendication 7, **caractérisé en ce que** le matériau de la couche composite convexe contient un additif aromatique qui confère au produit un parfum.

11. Procédé de fabrication selon la revendication 7, **caractérisé en ce que** le matériau de la couche composite convexe contient des paillettes.

12. Procédé de fabrication selon la revendication 7, **caractérisé en ce que** le matériau de la couche composite convexe contient des colorants ou des additifs fluorescents.

13. Procédé de fabrication de l'article 7, **caractérisé en ce que** le matériau de la couche composite convexe ne laisse pas passer la lumière UV.
